(19) Europäisches Patentamt
European Patent Office
Office européen des brevets

(11) **EP 4 282 732 A1**

(12) **EUROPEAN PATENT APPLICATION**

(43) Date of publication:
**29.11.2023 Bulletin 2023/48**

(21) Application number: **22174898.1**

(22) Date of filing: **23.05.2022**

(51) International Patent Classification (IPC):
***B62B 9/08*** (2006.01)    ***B62B 9/20*** (2006.01)

(52) Cooperative Patent Classification (CPC):
**B62B 9/085; B62B 9/20**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **HAMAX AS**
**1526 Moss (NO)**

(72) Inventors:
• **MONKEN, Olavo**
  **3514 HD Utrecht (NL)**
• **VAN DER LEEUW, Jesse**
  **1072 AH Amsterdam (NL)**

(74) Representative: **Meissner Bolte Partnerschaft mbB**
**Patentanwälte Rechtsanwälte**
**Postfach 86 06 24**
**81633 München (DE)**

(54)    **HAND-OPERATED BRAKING SYSTEM AND STROLLER**

(57)    The present invention relates to a braking system (10), which comprises: at least one braking mechanism; an actuator (14); and at least one brake cable (12) operably connected between the actuator (14) and the braking mechanism, wherein the actuator (14) includes: an input member (16) configured to be displaced to cause brake operation; and at least one transmission member (18) configured to be moved by the force input member (16) and thus translate the at least one brake cable (12) in response to the displacement of the force input member (16), wherein the transmission member (18) is so configured that the translated distance of the brake cable (12) varies from a larger amount to a smaller amount per unit movement of the force input member (16) with increased displacement of the force input member (16).

FIG. 1

EP 4 282 732 A1

## Description

### TECHNICAL FIELD

This invention relates to a hand-operated braking system, particularly one which is suitable for human-powered vehicles such as jogging strollers.

### BACKGROUND ART

Recent jogging strollers have, in addition to parking brakes, employed hand-operated brakes which allow the user or runner to control the speed of, and particularly slow down, the jogging stroller when cruising at a fast pace or running downhill with the strollers. US 2014 345980 A1 discloses a stroller with a drag brake which retards rotation of the wheel, and is controlled by a bicycle-type brake lever. The braking force is proportional to the distance the lever is pulled.

### SUMMARY

The lever principle is typically used for known brake systems. There is, however, an inherent problem with this mode of operation. Considering the limited space for operation by the user of the jogging stroll and that hands have a limited reach, the generated braking force when using a simple lever may not be sufficient to fully decelerate the stroller. The smaller the distance which the lever is pulled, the less distance the brake pads move toward the counter wheel parts, resulting in a smaller the braking force. On the contrary, the larger the operable angle of the lever, the longer it takes for the brake to be activated, which can be dangerous when the carrier is full.

It is an object of the present invention to overcome the disadvantages of the state of the art, in particular it is an object to provide a brake and/or braking system capable of exerting sufficient braking force with a quick response.

The object is solved by the subject matter of independent claims 1 and 14.

According to an aspect of the present invention, a braking system is provided. The system comprises: at least one braking mechanism; an actuator; and at least one brake cable operably connected between the actuator and the braking mechanism. The actuator includes: a force input member configured to be displaced so as to cause brake operation; and at least one transmission member configured to be moved by the force input member and thus translate the at least one brake cable in response to the displacement of the force input member. The transmission member is so configured that the translated distance of the brake cable varies from a larger to a smaller amount per unit movement of the force input member with increased displacement of the force input member.

The inventive system makes a compromise between motion range of input and force ratio. The first stage of the movement of the input member or actuator would favour travel of the force input member over the applied by the user and thus resultant force which is applied in braking; this ensures quick engagement of the braking mechanism. During this stage, however, there would be little need for force, as the braking mechanism is not yet engaged or fully engaged.

The second stage of the movement of the input member favours force from the user which will then lead to increased applied braking over travel of the input member; this ensures that sufficient braking force can ultimately be applied. The more force being applied into the input member even with the smaller travel thereof, the more braking force the braking mechanism produces. Since the braking mechanism is already in braking engagement, there is barely any need for the input member to travel to provide satisfactory and well-controlled and controllable braking. However, favouring the force transfer over input member travel distance multiplies the force from the user into the braking mechanism.

### BRIEF DESCRIPTION OF THE DRAWINGS

The principle of the invention will now be more fully described by way of example with reference to the accompanying drawings. The same reference numbers may be used in different drawings to identify the same or similar elements. In certain instances, the description of well-known devices and methods are omitted so as not to obscure the description of the present invention with unnecessary detail.

Figure 1 illustrates a schematic view of a stroller having a hand-operated braking system according to the invention.

Figure 2 shows the internal structure of an actuator of the braking system when the brake is "OFF".

Figure 3 shows the internal structure of the actuator of Figure 2 when the brake is "ON".

Figures 4A and 4B illustrate the movement of a spool of the actuator during the brake operation.

Figures 5A and 5B illustrate the movement of another spool during the brake operation.

Figures 6A and 6B illustrate the movement of another spool during the brake operation.

Figure 7 shows another embodiment of a stroller with the actuator being arranged in a different orientation.

### DETAILED DESCRIPTION

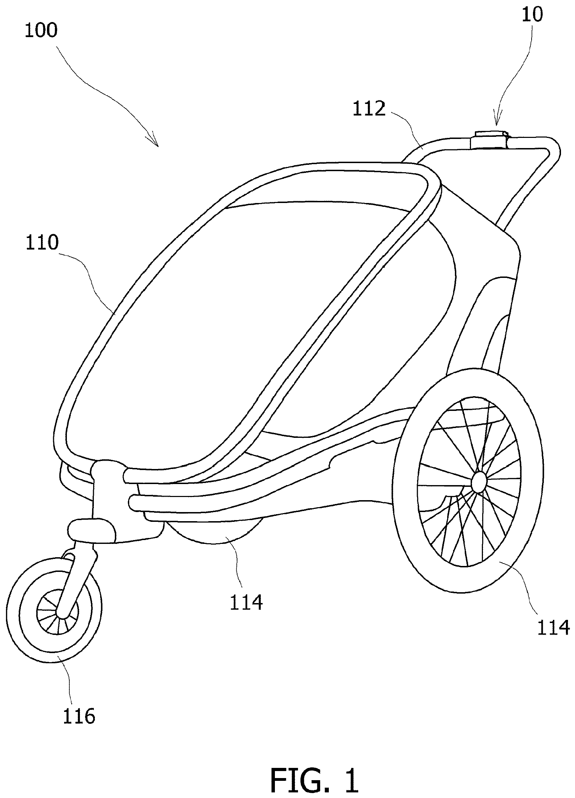

Figure 1 shows a schematic view of a stroller 100 according to the invention. The depicted stroller 100 comprises a hand-operated braking system 10 according to the invention.

The stroller 100 may include a body 100 inside which a child seat can be provided, a handle bar or push bar 112, two rear wheels 114R, 114L, and one or more front wheels 116. The stroller 100 may further include a known parking brake (not shown). Whilst three wheels are shown, it is clear that any number of wheels could be employed as required, including four.

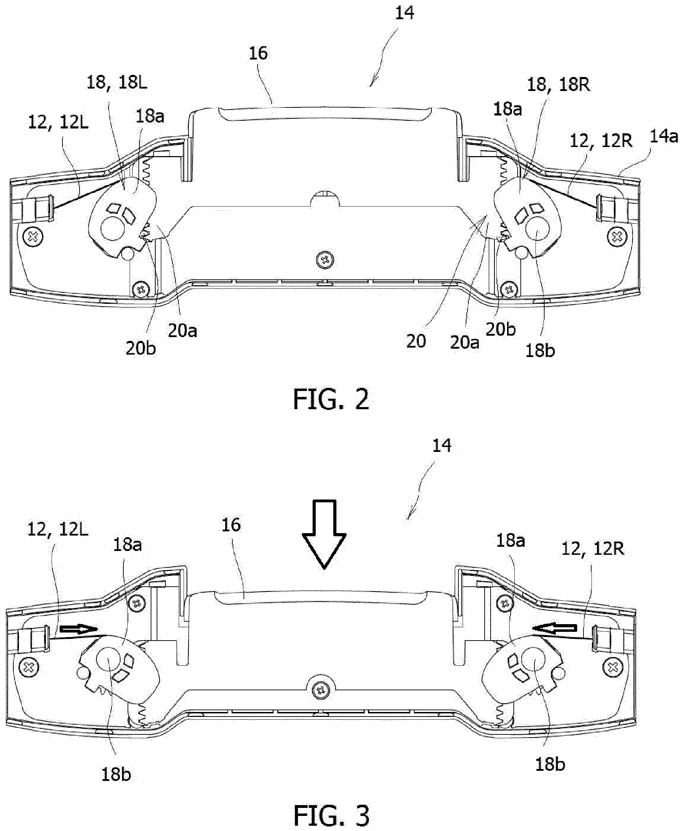

The stroller 100 includes one or more (two in this example) braking mechanisms (not shown), which are preferably mechanical braking mechanisms operable via one or more (two in this example) brake cables 12L, 12R (see, figure 2), respectively. Any known braking mechanisms including disc brakes, rim brakes or drum brakes may be used. In one embodiment, two braking mechanisms may be mounted on the respective rear wheels 114R, 114L. Alternatively, one (or two) braking mechanism(s) may be mounted on the front wheel(s) 116 or only one braking mechanism may be mounted on one of the rear wheels 114R, 114L.

With reference to figure 2, an actuator 14 of the hand-operated braking system 10 is shown. The one or more brake cables 12R, 12L are operably connected between the actuator 14 and the one or more, respective, braking mechanisms. In one embodiment, the cable 12R on the right-hand side may operably be connected between the actuator 14 and the braking mechanism on the right rear wheel 114R; the other cable 12L on the left-hand side may operably be connected between the actuator 14 and the braking mechanism on the left rear wheel 114L. Each brake cable 12 may be a steel cable or other material which is suitable for appropriate and reliable force transfer from the actuator 14 to the braking mechanism. Each brake cable 12 may be routed along the handle bar 112 and body frames toward the respective braking mechanism. Each brake cable 12 may extend through the handle bar 112 and body frames, should these be of a hollow construction. Alternatively, the brake cable 12 may be attached on the outer surfaces of the handle bar 112 and body frames. When the brake cable 12 is pulled via operation of the actuator 14, brake shoes or pads in the braking mechanism will be moved to generate friction against the counter parts of said braking mechanism, reducing the stroller's speed or ultimately bringing it to a halt.

The actuator 14 includes a hand-operated force input member 16 configured to be displaced so as to cause brake operation. The force input member 16 may include a hand-operated button 16. The button 16 is slidably retained by a housing 14a of the actuator 14. The button 16 slides in response to a gripping or pressing operation thereof by the user. A shallow recess tailored to the palms of adult users may be formed on the upper surface of the button 16. A recess may also be formed on the underside of the housing 14a corresponding to the position of the button 16, which allows the user to reliably grip the button 16.

The actuator 14 further includes one or more (two in this example) transmission members 18, 18R, 18L. The transmission member 18 is configured to be moved by the force input member 16 and thus translate, preferably pull the respective brake cable 12 in response to the displacement of the force input member 16 by the user. The two transmission members 18R, 18L may be symmetrically arranged at the right and left side of the button 16, respectively. In this example, when the single button 16 is pressed down by the user, the two transmission members 18R, 18L draw the brake cables 12R, 12L in a symmetrical and simultaneous manner, resulting in that the braking force is evenly applied to the right and left wheels 114R, 114L. Of course, if so desired the system could be operated such that asymmetrical braking forces may be generated and applied, particularly between the front wheel(s) and the rear wheel(s).

In one embodiment, the transmission member 18 is so configured that the translated distance of the brake cable 12, preferably the pulled distance of the brake cable 12, varies from a larger amount to a smaller amount per unit movement of the force input member 16 with increased displacement of the force input member 16. The larger translated distance of the brake cable means a larger movement of a movable friction component such as a brake shoe, a brake pad or the like within the braking mechanism. In contrast, a smaller translated distance of the brake cable means a smaller movement of the movable friction component within said braking mechanism. That is, even if the input member is operated at a constant speed, the moving speed of the friction component of the braking mechanism varies via the transmission member 18.

Preferably, each transmission member 18 is so configured that the translated distance of the brake cable 12 per unit displacement of the input member 16 at the start of, or in the first part or even half stage of the brake operation is greater than that at the end of, or in the second part or half stage of the brake operation. The first stage of the movement of the input member 16 would favour travel of the input member 16 over force which must be applied by the user and which will be applied to the braking mechanism; this ensures quick engagement of the braking mechanism by ensuring that the user can easily operate the input member 16 without significant counter force from the braking mechanism. During this stage, however, there would be little need for force, as the braking mechanism is not yet engaged or fully engaged. The second stage of the movement of the input member 16 favours the need for the user to apply force over significant travel of the input member 16; this ensures sufficient braking force. The more force being applied into the input member 16, the more braking force the braking mechanism produces. Since the braking mechanism is already in braking engagement, there is barely any need for the input member 16 to travel. However, the favourable force transfer multiplies the force from the user into the force applied by the braking mechanism.

The transmission member 18 may have a variable transmission ratio in which the ratio of the displacement of the force input member 16 with respect to the translated distance of the brake cable 12 at the start of, or in the first part or even half stage of, the brake operation is smaller than that at the end of, or in the second part or half stage of, the brake operation. Therefore,

$$\frac{D1_{in}}{D1_{out}} < \frac{D2_{in}}{D2_{out}}$$

where $D1_{in}$ represents the displacement of the force input member 16 at the start of, or in the first part or half stage of the brake operation; $D1_{out}$ represents the translated distance of the brake cable 12 at the start of, or in the first part or half stage of the brake operation; $D2_{in}$ represents the displacement of the force input member 16 at the end of, or in the second part or half stage of the brake operation; and $D2_{out}$ represents the translated distance of the brake cable 12 at the start of, or in the second part or half stage of the brake operation. This further ensures that the leading time until the brake mechanism starts to engage is shortened, whilst sufficient braking force (friction) is generated during the braking operation. It should be noted that, in actual operation, when the braking mechanism enters in engagement, the translated distance of the brake cable 12 at the location of the transmission member 18 or at the proximal end of the cable 12 does not necessary to be the same as that at the braking mechanical or at the distal end of the cable due to extension of the brake cable 12. Therefore, each of $D1_{out}$ and $D2_{out}$ may be measured at the location of the transmission member 16, or calculated based on the geometry of the transmission member 16.

It is preferable that the transmission ratio of the transmission member 18R, 18L gradually increases from the start of the brake operation toward the end of the brake operation.

The shortened leading time until the brake mechanism starts to engage may be ensured, if the transmission ratio of the transmission member at the start of the brake operation,

$$\frac{D1_{in}}{D1_{out}}$$

is smaller than 1, meaning it starts heavier but with more speed.

It is preferable that the transmission ratio of the transmission member 18 at the start of the brake operation,

$$\frac{D1_{in}}{D1_{out}}$$

is in a range of from 0.5 to 0.8, more preferably in a range of from 0.6 to 0.7, most preferably 0.625. In the most preferable example. the movement starts with a ratio of 1:1.6.

Sufficient braking force whilst more control during the braking operation may be ensured, if the transmission ratio of the transmission member 18 at the end of the brake operation,

$$\frac{D2_{in}}{D2_{out}}$$

is larger than 1 At the end of braking, the brake is harder to apply due to more feedback from the braking mechanism but the higher force will lead to harder braking, but with more control as it is not immediate braking compared to the start of the brake operation.

It is preferable that the transmission ratio of the transmission member 18 at the end of the brake operation,

$$\frac{D2_{in}}{D2_{out}}$$

is in a range of from 1.5 to 2.5, more preferably in a range of from 1.3 to 2.3, most preferably 2. In the most preferable example. the movement ends with a ratio of 2:1.

With reference to figures 2 and 3, each transmission member 18 may include a spool 18a around which the brake cable 12 is, at least partially, wound. The spool 18a is rotatable around a shaft 18b which is secured within, or part of, the housing 14a. Although the brake cable 12 is partially wound around the spool 18a in this embodiment, the brake cable 12 may fully be wound around the spool 18a. The proximal end of the brake cable 12 may be fixed to the periphery of the spool 18a via an engagement pin, welding, adhesive, moulding or the like. The spool 18a may also have a groove on its periphery to properly guide the brake cable 12 and avoid disengagement thereof. The spool 18a is rotatable around its axis in response to the displacement of the force input member 16. The rotation of the spool 18a may be achieved via a rack and pinion mechanism 20, through which the displacement of the force input member 16 causes the transmission member 18 to translate the brake cable 12. Specifically, the button 16 may include one or more (two in this example) racks 20a; each spool 18a may include the pinion 20b engaging with the corresponding rack 20a. The racks 20a, or linear gears, are formed on each side of the button 16 and extend along the pressing direction of the button 16. The pinions 20b, or round gears, are formed on each spool 18a to face and engage with the respective racks 20a.

Subsequently, the braking operation of the hand-operated braking system 10 according to this invention is illustrated in figure 3. When the button 16 is displaced, in the figure this is in the downward direction, from the initial state of figure 2, the racks 20a drive the spools 18a to rotate clockwise and counter-clockwise respectively. The sliding stroke of the button 16 may be ended once the bottom of the button 16 touches the opposing wall of the housing 14a. Alternatively, one or more stoppers may be provided inside the housing 14a. As the spools 18a rotate, the brake cables 12R, 12L are drawn left and right respectively around the outer surface of the respective spools 18a, whereby the moved brake cables 12R, 12L cause that the friction components such as brake pads, brake shoes, or the like in the braking mechanisms engage with the counter components of said braking mechanisms. Since the braking mechanism usually has a means for urging the friction components in the release direction, no urging means such as a spring for returning the button 16 to the initial position is required in the actuator 14. However, in addition to the urging means of the braking mechanisms, one or more urging means may be arranged so as to assist the button 16 in returning to its initial position of figure 2.

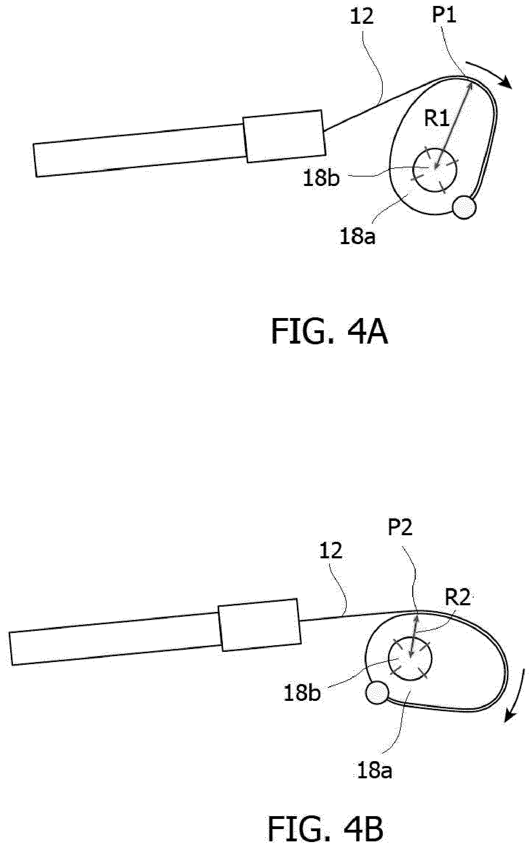

With reference to figure 4, the spool 18a before and after rotation is outlined, highlighting the variable outer profile and radius thereof. The spool 18a has a first radius R1, taken from the point of rotation around the shaft 18b, at a first periphery point P1 where the brake cable 12R, 12L intersects the periphery of the spool 18a at the start of the brake operation (figure 4A). The brake cable 12 is wound around the spool 18a from the proximal end of the brake cable to the point P1, and separates at the point P1 from the periphery of the spool 18a toward the braking mechanism. Likewise, the spool 18a has a second radius R2 at a second periphery point P2 where the brake cable 12 intersects the periphery of the spool 18a at the end of the brake operation (figure 4B). The brake cable 12 is wound around the spool 18a from the proximal end of the brake cable to the point P2, and separated at the point P2 from the periphery of the spool 18a toward the braking mechanism. The first radius R1 is larger than the second radius R2. Therefore, in the early stage of the brake operation, the cable 12 is translated, preferably pulled by a greater distance per unit rotation angle of the spool 18a, whereas in the subsequent or latter stage of the brake operation, the cable is translated, preferably pulled by a shorter distance per unit rotation angle of the spool 18a. In one non-limiting example, R1 is 20 mm; R2 is 6.5 mm.

It is preferable that the radius of the spool 18a gradually decreases from the first periphery point P1 toward the second periphery point P2. This allows for the user to feel smooth operability of the force input member 16.

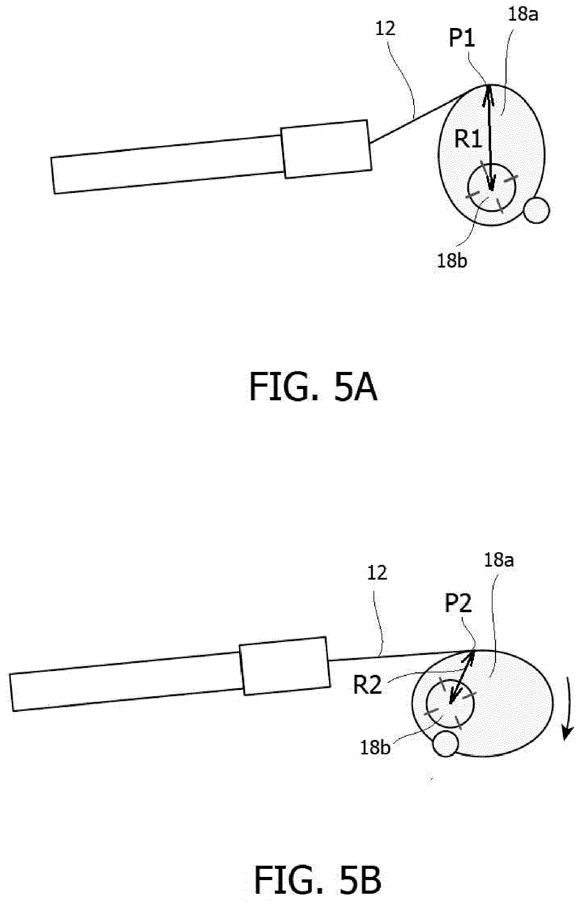

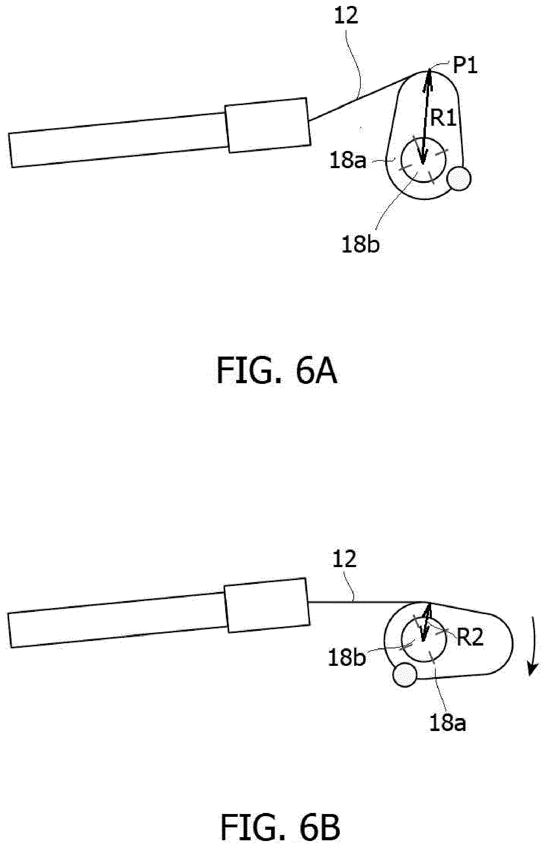

The contour of the spool 18a is not limited to those shown in figures 2 to 4. The outer contour of the spool 18a may be a regular ellipse as shown in figures 5A and 5B, wherein figure 5A shows the spool 18a at the start of the brake operation, and figure 5B shows the spool 18a at the end of the brake operation. As shown in figures 6A and 6B, the spool 18a may have an outer contour in which two semicircles with different diameters from each other are connected to each other via two straight lines. The contour of the spool may be a perfect circle, wherein the rotation axis is offset to meet the R1>R2 (not shown).

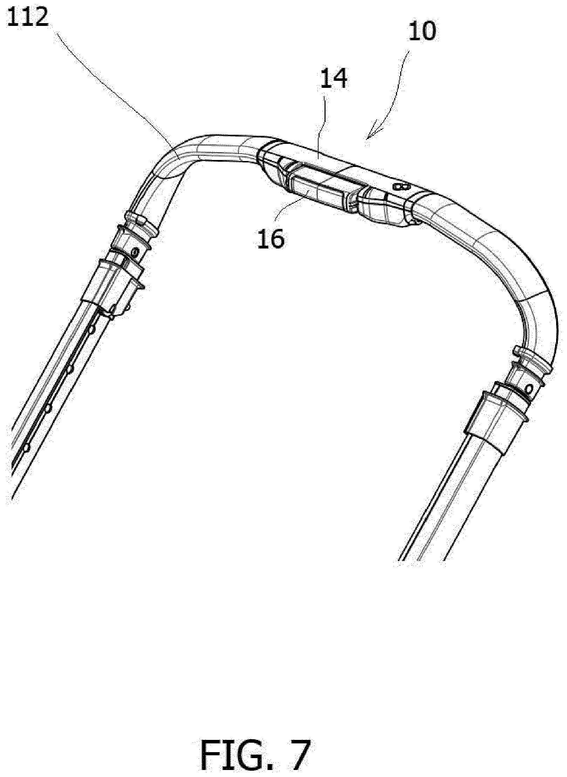

With reference to figure 7, another stroller according to the invention is shown. The orientation of the actuator 14 and the button 16 is different from that of the stroller of figure 1. The button 16 is so arranged as to slide in the front-back direction of the stroller. In this case, the button 16 will be pressed by the vicinity of the first and second joints of the user's fingers. The distal surface of the button 16 may be shaped to be tailored to the fingers of adult users. For example, the distal surface of the button 16 may have a wavy curve.

Although not shown, the button 16 may be arranged in the opposite orientation to that of figure 1, to be pushed from the bottom side to the top. Alternatively, the button 16 may be oriented at an angle from the horizontal or vertical direction.

Whilst the invention has been described with reference to preferred embodiments, it is noted that various changes may be made within the scope of the claims as appended. For example, instead of the button 16 and the rack and pinion mechanism 20, a combination of a double pulley system as the transmission mechanism and a bicycle-type brake lever may be used, wherein the double pulley system comprises two pulleys with different diameters from each other and being stacked in its axial direction. One pulley with the smaller diameter is rotated by the brake lever via a wire, and the other pulley with the larger diameter draws the brake cable when rotating via the rotation of the smaller pulley, wherein the contour of the larger pulley and/or the position of the rotation axis is arranged to meet the R1> R2.

A means for locking the button 16 whilst being pressed may be provided, so that the braking system of the present invention may also be used as a parking brake. For this purpose, for example, a slider may be provided over the upper surface of the pressed button to regulate the upward movement thereof.

**LIST OF REFERENCE NUMERALS**

| 10 | Hand-operated braking system |
| 12, 12R, 12L | Brake cable |
| 14 | Actuator |
| 14a | Housing |
| 16 | Force input member, button |
| 18, 18R, 18L | Transmission member |
| 18a | Spool |

| 20 | Rack and pinion mechanism |
|----|---------------------------|
| 20a | Rack |
| 20b | Pinion |
| 100 | Stroller |
| 110 | Body |
| 112 | Handle bar |
| 114R, 114L | Rear wheel |
| 116 | Front wheel |

**Claims**

1. A braking system (10), comprising:

   at least one braking mechanism;
   an actuator (14); and
   at least one brake cable (12) operably connected between the actuator (14) and the braking mechanism,
   wherein the actuator (14) includes:

   a force input member (16) configured to be displaced so as to cause brake operation; and
   at least one transmission member (18) configured to be moved by the force input member (16) and thus translate the at least one brake cable (12) in response to the displacement of the force input member (16),
   wherein the transmission member (18) is so configured that the translated distance of the brake cable (12) varies from a larger amount to a smaller amount per unit movement of the force input member (16) with increased displacement of the force input member (16).

2. The braking system (10) according to claim 1, wherein the transmission member (18) is so configured that the translated distance of the brake cable (12) per unit displacement of the input member (16) at the start of, or in the first part or first half stage of operating the brake by displacement of the input member (16) is greater than that at the end of, or in the second part or second half stage of operating the brake by displacement of the input member (16).

3. The braking system (10) according to claim 1 or 2, wherein the transmission member (18) has a variable transmission ratio in which the ratio of the displacement of the force input member (16) with respect to the translated distance of the brake cable (12) varies from a smaller ratio to a higher ratio with increased displacement of the force input member (16).

4. The braking system according to claim 3, wherein the transmission ratio of the transmission member (18) gradually increases from the start of the brake operation toward the end of the brake operation.

5. The braking system (10) according to claim 3 or 4, wherein the transmission ratio of the transmission member (18) at the start of the brake operation is smaller than 1.

6. The braking system (10) according to any of claims 3 to 5, wherein the transmission ratio of the transmission member (18) at the start of the brake operation is in a range of from 0.5 to 0.8, preferably in a range of from 0.6 to 0.7, most preferably 0.625.

7. The braking system (10) according to any one of claims 3 to 6, wherein the transmission ratio of the transmission member (18) at the end of the brake operation is larger than 1.

8. The braking system (10) according to any of claims 3 to 7, wherein the transmission ratio of the transmission member (18) at the end of the brake operation is in a range of from 1.5 to 2.5, preferably in a range of from 1.3 to 2.3, most preferably 2.

9. The braking system (10) according to any one of claims 1 to 8, wherein the transmission member (18) includes a spool (18a) around which the brake cable (12) is wound, the spool (18a) being configured to rotate around its axis in response to the displacement of the force input member (16).
   preferably, wherein the spool (18a) has a first radius (R1) at a first periphery point (P1) where the brake cable (12) intersects the periphery of the spool (18a) at the start of the brake operation, and a second radius (R2) at a second periphery point (P2) where the brake cable (12) intersects the periphery of the spool (18a) at the end of the brake operation, the first radius (R1) being larger than the second radius (R2).

10. The braking system (10) according to claim 9, wherein the radius of the spool gradually decreases from the first periphery point (P1) toward the second periphery point (P2).

11. The braking system (10) according to any one of claims 1 to 10, wherein the actuator (14) includes a rack and pinion mechanism through which the displacement of the force input member (16) causes the transmission member to translate the brake cable (12).

12. The braking system (10) according to claim 11, wherein

    the force input member (16) includes a button (16) that has the rack (20a), and
    the transmission member (18) includes the pinion (20b) engaging with the rack (20a).

13. The braking system (10) according to any one of claims 1 to 12, wherein

the at least one braking mechanism comprises two braking mechanisms,
the at least one brake cable (12) comprises two brake cables (12R, 12L), and
the at least one transmission member (18) comprises two transmission members (18R, 18L), which are simultaneously moved by the force input member (16).

14. A stroller (100) comprising a braking system (10) according to one of claims 1 to 13.

15. The stroller (100) according to claim 14, further comprising a handle bar (112), wherein the actuator (14) is mounded on, or integrated with or within, the handle bar (112).

FIG. 1

**FIG. 2**

**FIG. 3**

## FIG. 4A

## FIG. 4B

FIG. 5A

FIG. 5B

FIG. 6A

FIG. 6B

112    10

14

16

FIG. 7

Europäisches
Patentamt

European
Patent Office

Office européen
des brevets

## EUROPEAN SEARCH REPORT

Application Number

EP 22 17 4898

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 441 317 A (WONDERLAND NURSERY GOODS [TW]) 5 March 2008 (2008-03-05) * pages 6-7; figures 3-5 * | 1-9, 11-15 | INV. B62B9/08 B62B9/20 |
| A | CN 204 077 757 U (KUNSHAN LITTLE DINOSANR CHILD PRODUCTS CO LTD) 7 January 2015 (2015-01-07) * figures * | 1-15 | |
| A | US 6 339 862 B1 (CHENG KENNY [TW]) 22 January 2002 (2002-01-22) * the whole document * | 1-15 | |
| A | EP 3 508 410 A1 (HONDA MOTOR CO LTD [JP]) 10 July 2019 (2019-07-10) * paragraphs [0060] - [0076]; figures 3-8 * | 1-15 | |

| | | | TECHNICAL FIELDS SEARCHED (IPC) |
|---|---|---|---|
| | | | B62B B62L |

The present search report has been drawn up for all claims

| Place of search | Date of completion of the search | Examiner |
|---|---|---|
| Munich | 20 October 2022 | Chaloupy, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 282 732 A1**

## ANNEX TO THE EUROPEAN SEARCH REPORT
## ON EUROPEAN PATENT APPLICATION NO.

EP 22 17 4898

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2022

| Patent document cited in search report | | Publication date | Patent family member(s) | | Publication date |
|---|---|---|---|---|---|
| GB 2441317 | A | 05-03-2008 | NONE | | |
| CN 204077757 | U | 07-01-2015 | NONE | | |
| US 6339862 | B1 | 22-01-2002 | NONE | | |
| EP 3508410 | A1 | 10-07-2019 | CN | 109973556 A | 05-07-2019 |
| | | | EP | 3508410 A1 | 10-07-2019 |
| | | | JP | 2019120964 A | 22-07-2019 |
| | | | US | 2019202527 A1 | 04-07-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014345980 A1